# EUROPEAN PATENT APPLICATION

(11) **EP 3 184 431 A1**
(43) Date of publication of application: **28.06.2017**
(21) Application number: 16159561.6
(22) Date of filing: 10.03.2016
(51) Int. Cl.: B64D 13/06, B64D 13/08, B64D 33/08

(54) **COOLING OR HEATING OF A PASSENGER ACCOMMODATION COMPARTMENT OF A MULTI-AXIS PASSENGER-CARRYING AIRCRAFT**

(30) Priority: 25.12.2015 CN 201521110856 U
(71) Applicant: Guanghou Ehang Intelligent Technology Co., Ltd., Guangzhou Guangdong 510663 (CN)
(72) Inventor: Du, Hao, 510663 Guangzhou (CN); Lin, Zuming, 510663 Guangzhou (CN)
(74) Representative: Corradini, Corrado

(57) **Abstract**

A multi-axis passenger-carrying aircraft is provided, comprising: a heat exchange system; a cabin; and a passenger accommodating compartment arranged inside the cabin; wherein the electrical system is arranged inside the passenger accommodating compartment, and wherein the heat exchange system is at least communicated with an air inlet on the exterior of the cabin, an air outlet in communication with the passenger accommodating compartment, and a cooling and heating device with an air inlet end communicated with the air inlet and an air outlet end communicated with the air outlet. In operation, air outside the aircraft may enter the heat exchange system via the air inlet and the cooling and heating device via the air inlet end to be cooled or heated by the cooling and heating device as desired. The air after heat exchange may be discharged via the air outlet end and enter the passenger accommodating compartment via the air outlet, providing cool air or warm air to the passenger accommodating compartment, allowing more comfort for the passenger(s) in the passenger accommodating compartment.

## Description

### TECHNICAL FIELD

The present disclosure pertains to the field of aircrafts, especially a multi-axis passenger-carrying aircraft.

### BACKGROUND

The applications of multi-axis passenger-carrying aircraft are growing nowadays because of its good maneuverability and mobility. During a flight, a passenger is seated inside the passenger accommodating compartment of the aircraft. However, a multi-axis passenger-carrying aircraft in the prior art cannot provide cool air or warm air to the passenger accommodating compartment. The temperature in the passenger accommodating compartment can be too warm during summer and too cold during winter, greatly affect the comfort of the passenger.

### SUMMARY

In one aspect of the present disclosure, a multi-axis passenger-carrying aircraft is provided, which is able to provide cool air or warm air to the passenger accommodating compartment, enhancing comfort of the passenger.

Therefore, in this aspect of the disclosure, the following technical solutions are disclosed.

A multi-axis passenger-carrying aircraft is provided, comprising: a heat exchange system; a cabin; and a passenger accommodating compartment arranged inside the cabin; wherein the electrical system is arranged inside the passenger accommodating compartment, and wherein the heat exchange system is at least communicated with an air inlet on the exterior of the cabin, an air outlet in communication with the passenger accommodating compartment, and a cooling and heating device with an air inlet end communicated with the air inlet and an air outlet end communicated with the air outlet.

In operation, air outside the aircraft may enter the heat exchange system via the air inlet and the cooling and heating device via the air inlet end to be cooled or heated by the cooling and heating device as desired. The air after heat exchange may be discharged via the air outlet end and enter the passenger accommodating compartment via the air outlet, providing cool air or warm air to the passenger accommodating compartment, allowing more comfort for the passenger(s) in the passenger accommodating compartment.

The technical solution will be further described below.

In addition to the above, the cooling and heating device may be provided with a heat exchange air duct formed by a plurality of semiconductor chilling plates arranged in a circle, with the air inlet end and the air outlet end both communicated with the heat exchange air duct. The cooling and heating device may perform heating or cooling with the semiconductor chilling plates, without the need for a compressor or coolant, which is safe and environmental friendly, providing higher safety factor of the aircraft. Meanwhile, it is small in volume and light in weight, allowing lighter total weight of the aircraft. In addition, there is no sliding component and thus high reliability and low noise, further promoting the comfort during the ride.

Furthermore, the heat exchange system may further comprise a circulating pipeline and a water row and a water pump provided in the circulating pipeline. The cooling and heating device may be provided with a containing cavity for placing the chilling plates and a water inlet and a water outlet communicated with the containing cavity. The circulating pipeline may be communicated with the water inlet at one end and with the water outlet at the other end. The semiconductor chilling plates emit large amounts of heat during operation, which may be dissipated via the water row, allowing good heat dissipation effects and longer service life of the semiconductor chilling plates.

Furthermore, the multi-axis passenger-carrying aircraft may comprise an accommodating compartment inside the cabin, wherein an electrical system is provided inside the accommodating compartment, the heat exchange system is provided with a thermovent communicated with the accommodating compartment, and wherein the thermovent is communicated with the air outlet end. During a flight, the electrical system powers each electric unit of the aircraft, which generates large amounts of heat. The outside air is cooled and then enters the thermovent via the air outlet end, providing cool air to the accommodating compartment to dissipate heat from the electrical system. In this way, it allows more stable operation of the electrical system and higher safety factor of the aircraft to ensure its safety.

Furthermore, the heat exchange system further comprises a thermorytic duct and a first valve provided in the thermorytic duct and wherein the thermorytic duct is communicated with the air outlet end at one end and with the thermovent at the other end. The first valve is opened or closed to control the opening or closing of the thermorytic duct, according to the heat emitting status of the electrical system, and thus the energy consumption is reduced.

Furthermore, the multi-axis passenger-carrying aircraft may further comprise a temperature sensor provided inside the passenger accommodating compartment and a controller electrically connected to the temperature sensor and electrically connected to the first valve. The temperature sensor detects the temperature inside the passenger accommodating compartment and then sends the data collected to the controller. The controller regulates the temperature inside the passenger accommodating compartment by controlling the opening and closing of the first valve, resulting in smart regulation.

Furthermore, the heat exchange system may further comprise a return air inlet communicated with the passenger accommodating compartment and with the thermovent. The remaining cool air in the passenger accommodating compartment is recovered by the return air inlet and provided to the accommodating compartment via the thermovent to dissipate heat from the electrical system. Therefore, it allows making best use of the cool air and energy saving of the aircraft.

Furthermore, the return air inlet may be provided with a first centrifugal fan. The remaining cooled air is sent to the thermovent by the first centrifugal fan to allow smoother flow of air.

Furthermore, the heat exchange system may further comprise an air outlet duct and a second valve provided in the air outlet duct, the air outlet duct being communicated with the air outlet end at one end and with the air outlet at the other end. The second valve is opened or closed to control the opening or closing of the air outlet duct, according to the temperature inside the passenger accommodating compartment, and thus the energy consumption is reduced.

Furthermore, a second centrifugal fan may be provided at the air inlet. The air outside may be sent to the air outlet by the second centrifugal fan to allow smooth air flow.

In comparison with prior art, the disclosure as disclosed in the present application provides the following benefits.

In operation, air outside the aircraft may enter the heat exchange system via the air inlet and the cooling and heating device via the air inlet end to be cooled or heated by the cooling and heating device as desired, allowing more comfort for the passenger(s) in the passenger accommodating compartment.

### BRIEF DESCRIPTION OF DRAWINGS

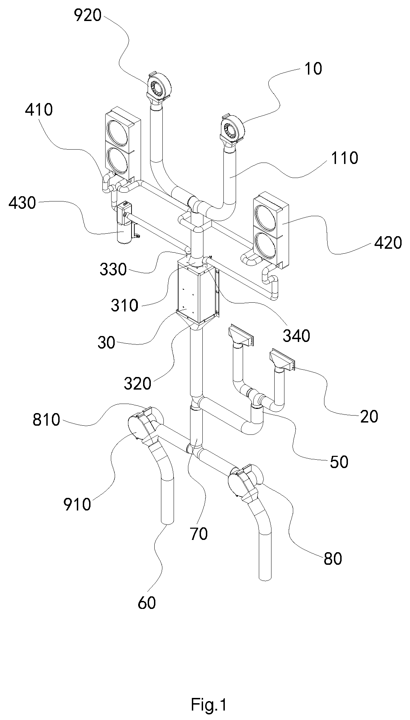

Figure 1 shows a structural schematic of the multi-axis passenger-carrying aircraft according to one embodiment of the present disclosure.

### Description of the reference signs:

10. air inlet, 110. air duct, 20. air outlet, 30.cooling and heating device, 310. air inlet end, 320. air outlet end, 330. water inlet, 340. water outlet, 410. circulating pipeline, 420. water row, 430. water pump, 50. air outlet duct, 60. thermovent, 70. thermorytic duct, 80. return air inlet, 810, passenger accommodating compartment adapting piece, 910 first centrifugal fan, 920. second centrifugal fan, 80. Air duct.

### DETAILED DESCRIPTION OF PREFERRED EMBODIMENTS

Examples for the purpose of illustrating the embodiments of the present disclosure only will be described in details with reference to the drawings.

As shown in Figure 1, a multi-axis passenger-carrying aircraft is provided, comprising: a heat exchange system; a cabin (not labeled in the figure); a passenger accommodating compartment (not labeled in the figure) arranged inside the cabin; wherein the electrical system is arranged inside the passenger accommodating compartment, and wherein the heat exchange system is at least communicated with an air inlet 10 on the exterior of the cabin, an air outlet 20 in communication with the passenger accommodating compartment, and a cooling and heating device 30 with an air inlet end 310 communicated with the air inlet 10 and an air outlet end 320 communicated with the air outlet 20.

In operation, air outside the aircraft may enter the heat exchange system via the air inlet 10 and the cooling and heating device 30 via the air inlet end 310 to be cooled or heated by the cooling and heating device 30 as desired. The air after heat exchange may be discharged via the air outlet end 320 and enter the passenger accommodating compartment via the air outlet 20, providing cool air or warm air to the passenger accommodating compartment, allowing more comfort for the passenger(s) in the passenger accommodating compartment.

In this embodiment, the cooling and heating device 30 may be provided with a heat exchange air duct (not labeled in the figure) formed by a plurality of semiconductor chilling plates arranged in a circle (not labeled in the figure), with the air inlet end 310 and the air outlet end 320 both communicated with the heat exchange air duct. The cooling and heating device 30 may perform heating or cooling with the semiconductor chilling plates, without the need for a compressor or coolant, which is safe and environmental friendly, providing higher safety factor of the aircraft. Meanwhile, it is small in volume and light in weight, allowing lighter total weight of the aircraft. In addition, there is no sliding component and thus high reliability and low noise, further promoting the comfort during the ride. Other heat exchange forms may be adopted by the cooling and heating device 30 as desired in practice.

As shown in Figure 1, the heat exchange system may further comprise a circulating pipeline 410 and a water row 420 and a water pump 430 provided in the circulating pipeline 410. The cooling and heating device 30 may be provided with a containing cavity (not labeled in the figure) for placing the chilling plates and a water inlet 330 and a water outlet 340 communicated with the containing cavity. The circulating pipeline 410 may be communicated with the water inlet 330 at one end and with the water outlet 340 at the other end. The semiconductor chilling plates emit large amounts of heat during operation, which may be dissipated via the water row 420, allowing good heat dissipation effects and longer service life of the semiconductor chilling plates.

The heat exchange system may further comprise an air outlet duct 50 and a second valve (not labeled in the figure) provided in the air outlet duct 50, the air outlet duct 50 being communicated with the air outlet end 320 at one end and with the air outlet 20 at the other end. The second valve is opened or closed to control the opening or closing of the air outlet duct 50, according to the temperature inside the passenger accommodating compartment, and thus the energy consumption is reduced.

As shown in Figure 1, the multi-axis passenger-carrying aircraft may comprise an accommodating compartment (not labeled in the figure) inside the cabin, wherein an electrical system is provided inside the accommodating compartment, the heat exchange system is provided with a thermovent 60 communicated with the accommodating compartment, and wherein the thermovent 60 is communicated with the air outlet end320. During a flight, the electrical system powers each electric unit of the aircraft, which generates large amounts of heat. The outside air is cooled and then enters the thermovent 60 via the air outlet end 320, providing cool air to the accommodating compartment to dissipate heat from the electrical system. In this way, it allows more stable operation of the electrical system and higher safety factor of the aircraft to ensure its safety.

As shown in Figure 1, the heat exchange system further comprises a thermorytic duct 70 and a first valve provided in the thermorytic duct 70 and wherein the thermorytic duct 70 is communicated with the air outlet end 320 at one end and with the thermovent 60 at the other end. The first valve (not labeled in the figure) is opened or closed to control the opening or closing of the thermorytic duct 70, according to the heat emitting status of the electrical system, and thus the energy consumption is reduced.

In this embodiment, the cooling and heating device 30 is communicated with a three-way pipe at its air outlet end 320, one outlet of the three-way pipe communicated with the air outlet end 320, one outlet serving as a air outlet duct, and the third outlet serving as thermorytic duct 70.

As shown in Figure 1, the heat exchange system may further comprise a return air inlet 80 communicated with the passenger accommodating compartment and with the thermovent 60. The remaining cool air in the passenger accommodating compartment is recovered by the return air inlet 80 and provided to the accommodating compartment via the thermovent 60 to dissipate heat from the electrical system. Therefore, it allows making best use of the cool air and energy saving of the aircraft.

As shown in Figure 1, the return air inlet 80 may be communicated with the heat exchange duct via a passenger accommodating compartment adapting piece 810. The return air inlet 80 may be provided with a first centrifugal fan 910. The remaining cooled air is sent to the thermovent 60 via the air outlet end 320 by the first centrifugal fan 910 to allow smoother flow of air.

In this embodiment, the multi-axis passenger-carrying aircraft is provided with two air inlets 10, and a second centrifugal fan 920 is provided at the air inlet 10.The air outlet duct 50 is communicated with two air outlets 20. The heat exchange duct is provided with two thermovents 60 and two return air inlets 80. The cabin is provided with the second centrifugal fan 920 in the roof, the cooling and heating device 30 in the lateral plate, and the passenger accommodating compartment in the floor. The air may be sent to the cooling and heating device 30 by the second centrifugal fan 920 via an air duct 110 and then to the passenger accommodating compartment and the accommodating compartment via the three-way pipe of the air outlet end 320. The second centrifugal fan 920, the cooling and heating device 30, and the passenger accommodating compartment may be located anywhere else inside the cabin as desired in practice. The numbers of the air inlet 10, the air outlet 20, the thermovent 60, and the return air inlet 80 may be more than one, as desired in practice.

The multi-axis passenger-carrying aircraft may further comprise a temperature sensor (not labeled in the figure) provided within the passenger accommodating compartment and the accommodating compartment and a controller (not labeled in the figure) electrically connected to the temperature sensor. The first valve in the thermorytic duct 70, the second valve in the air outlet duct 50, and the cooling and heating device 30 are all electrically connected to the controller. The temperature sensor inside the passenger accommodating compartment detects the temperature within the passenger accommodating compartment and sending the detected temperature to the controller. The controller controls the cooling and heating device 30 to perform cooling or heating according to the information received, and regulates the temperature inside the passenger accommodating compartment by opening or closing the second valve. The temperature sensor inside the accommodating compartment detects the temperature within the accommodating compartment and then sends the data collected to the controller. The controller regulates the temperature inside the accommodating compartment by controlling the opening and closing of the first valve, resulting in smart regulation.

The technical features in the embodiments above may be implemented in any combination. For the purpose of simplicity, not all combinations are described herein. However, such combination should all be considered within the scope of the present disclosure provide that there is no contradiction.

The detailed embodiments described herein are only for the purpose of illustrating the present disclosure, and are not intended to limit the scope of the present disclosure in any way. It would be understand by a person skilled in the art that various changes and modifications can be made to the embodiments described herein without departing from the scope and spirit of the present disclosure. Such changes and modifications are contemplated by the present disclosure, the scope of which should only be defined by the following claims.

## Claims

1. A multi-axis passenger-carrying aircraft, **characterized in that** it comprises:
a heat exchange system;
a cabin; and and
a passenger accommodating compartment arranged inside the cabin;
wherein the heat exchange system is at least communicated with an air inlet on the exterior of the cabin, an air outlet in communication with the passenger accommodating compartment, and a cooling and heating device with an air inlet end communicated with the air inlet and an air outlet end communicated with the air outlet.

2. The multi-axis passenger-carrying aircraft according to Claim 1, **characterized in that** the cooling and heating device is provided with a heat exchange air duct formed by a plurality of semiconductor chilling plates arranged in a circle, with the air inlet end and the air outlet end both communicated with the heat exchange air duct.

3. The multi-axis passenger-carrying aircraft according to Claim 2, **characterized in that** the heat exchange system further comprises a circulating pipeline and a water row and a water pump provided in the circulating pipeline, the cooling and heating device is provided with a containing cavity for placing the chilling plates and a water inlet and a water outlet communicated with the containing cavity, and the circulating pipeline is communicated with the water inlet at one end and with the water outlet at the other end.

4. The multi-axis passenger-carrying aircraft according to Claim 1, **characterized in that** it further comprises an accommodating compartment inside the cabin, wherein an electrical system is provided inside the accommodating compartment, the heat exchange system is provided with a thermovent communicated with the accommodating compartment, and wherein the thermovent is communicated with the air outlet end.

5. The multi-axis passenger-carrying aircraft according to Claim 4, **characterized in that** the heat exchange system further comprises a thermorytic duct and a first valve provided in the thermorytic duct, wherein the thermorytic duct is communicated with the air outlet end at one end and with the thermovent at the other end.

6. The multi-axis passenger-carrying aircraft according to Claim 5, **characterized in that** it further comprises a temperature sensor provided within the passenger accommodating compartment and a controller electrically connected to the temperature sensor and electrically connected to the first valve.

7. The multi-axis passenger-carrying aircraft according to Claim 1, **characterized in that** the heat exchange system further comprises a return air inlet communicated with the passenger accommodating compartment and with the thermovent.

8. The multi-axis passenger-carrying aircraft according to Claim 7, **characterized in that** the return air inlet is provided with a first centrifugal fan.

9. The multi-axis passenger-carrying aircraft according to Claim 1, **characterized in that** the heat exchange system further comprises an air outlet duct and a second valve provided in the air outlet duct, the air outlet duct being communicated with the air outlet end at one end and with the air outlet at the other end.

10. The multi-axis passenger-carrying aircraft according to any of Claims 1-9, **characterized in that** a second centrifugal fan is provided at the air inlet.
